# EUROPEAN PATENT APPLICATION

(11) **EP 4 129 859 A1**
(43) Date of publication of application: **08.02.2023**
(21) Application number: 21774243.6
(22) Date of filing: 18.03.2021
(51) Int. Cl.: B65D 88/12, B65F 1/12, B65F 1/14, B29C 41/04

(54) **DEVICE FOR DUMPING WASTE PRODUCTS AND METHOD FOR PRODUCING A DEVICE FOR DUMPING WASTE PRODUCTS**

(30) Priority: 24.03.2020 BR 102020005833
(71) Applicant: Braskem S.A., 42810-000 Camaçari - BA (BR)
(72) Inventor: OLIVEIRA ALVES DA SILVA, Jorge Alexandre, 05.501-050 Butantã - SP (BR); TEISSEIRE, Daniel, 05.501-050 Butantã - SP (BR)
(74) Representative: Louis Pöhlau Lohrentz
(86) International application number: PCT/BR2021/050112
(87) International publication number: WO 2021/189119

(57) **Abstract**

This invention refers to an equipment for waste discharge (1) comprising a body (2) formed by the connection between a pair of side walls (3, 3') and a bottom portion, so that the body (2) defines an internal portion (A) of the equipment (1), wherein the waste discharge is performed at the internal portion (A) of the equipment (1), so that the equipment for waste discharge further comprises a lifting beam (5) surrounding at least part of an external portion (B) of the body (2). A method to produce an equipment for waste discharge is also described.

## Description

This invention refers to an equipment for waste discharge and a method to produce an equipment for waste discharge. More specifically, this invention addresses an equipment for waste discharge, wherein its body is manufactured in a plastic material.

### Background

Equipment for waste discharge, popularly known as dumps, is commonly used for discharge of various kinds of materials. In a very usual application, such equipment is placed at streets and/or avenues of a certain city, and receive residues generated by civil construction works, for instance.

However, there are some concerns arising from the use of equipment for waste discharge known by the state of art, both relating to the kind of use and to the manufacturing process thereof.

For the sake of clarity of the lessons disclosed herein, the equipment for waste discharge shall be also referred to as dump.

Manufactured in metallic material, the dumps known by the state of art have excessive weight (even if they are empty), thus raising difficulty in its transportation from the storage point to the collection point, and then to the waste discharge point.

It is worth reminding that the dumps known by the state of art are carried through specialized trucks, so that the user of such vehicle is also in charge of the placement of dumps inside the truck that, due to the excessive weight of dumps, can trigger significant incidents.

The excessive weight of dumps known by the state of art is detrimental not only to the practitioner in charge of handling and carrying the equipment, but also to the community where the dump is placed.

To mitigate the inconveniences caused by the placement of a dump in public ways, dumps are usually positioned and removed in low-traffic periods, namely , in the early hours; in this respect, the manufacture of such equipment exclusively from metallic materials causes excessive noise due to the friction between the dumps and the soil, as well as to the contact between the dumps' walls and the supporting surface of the truck..

Further, the dumps known by the state of art have a reduced useful life, as the waste discharge of civil works gradually causes damages to dump's wall, with appearance of "holes". Said damages to the equipment are also converted into potential cause of accidents, as the wastes stored inside the dump can fall during its transport and placement inside the truck. Moreover, such equipment can hardly be replaced.

This invention circumvents the obstacles described above by using an equipment for waste discharge, wherein the body is manufactured in plastic material.

This proposed technique reduces the dump's weight when compared to the ones from prior art, and optimizes the transportation thereof, thus improving its durability, reducing the risk of accidents , and also the noise for carrying and handling the dumps.

Moreover, the equipment for waste discharge as proposed by this invention improves the dump's useful life, as a result from lower deterioration caused by its contact with the load. As demonstrated below, there is no contact between the load and the metallic portions of the equipment.

Besides, thanks to the lessons disclosed herein, the manufacture and maintenance of the equipment require reduced workforce, and the equipment as proposed by the invention has a major body that can be replaced or recycled in an easy manner.

Additionally, the equipment suggested by this invention has a better look than the ones currently known, which is an advantage for use in urban regions. Last, the lessons disclosed herein address an equipment that incorporates accessories and signaling means with improved safety, given that, during the manufacturing process of the equipment, the signaling means can be incorporated through a technique known as in mold labeling, or bas-relief modeling, thus reducing the risk of vandalism and/or robbery.

Moreover, the equipment proposed herein is safer when compared to the ones from prior art, as it has rounded borders.

An additional advantage from the equipment proposed by this invention consists in the fact that it can be carried by the same vehicles used to the transportation of dumps known by prior art. In other words, the equipment proposed herein can be coupled with the trucks currently used to the transportation of this kind of equipment.

As discussed in more detail below, this invention specifically describes a method to manufacture an equipment for waste discharge, wherein the body of the equipment is made of plastic material, by using a rotational molding process.

The advantages and benefits of the method and equipment as proposed by this invention shall be better understood from the description below, as well as from the figures submitted.

### Objectives of the invention

This invention intends to provide an equipment for waste discharge, wherein the body of said equipment is produced in plastic material.

Another objective of this invention is to provide an equipment for waste discharge manufactured from a rotational molding process.

Another objective of this invention is to provide an equipment for waste discharge which avoids contact between the residues placed inside the equipment and the metallic parts thereof.

An additional objective of this invention is to provide an equipment having a lifting beam, wherein said lifting beam is configured to surround at least part of an external portion of the equipment's body.

Another objective of this invention is to provide an equipment having a supporting chassis, wherein the supporting chassis and the lifting beam are formed by metallic material.

An additional objective of this invention is to provide an equipment for waste discharge, wherein the body comprises a support flange for accommodation and placement of the lifting beam.

This invention also intends to provide a method to produce an equipment for waste discharge.

### Brief description of the invention

The objectives of the invention shall be reached through an equipment for waste discharge comprising a body formed by a connection between a pair of side walls and a bottom portion, so that the body defines an internal portion of the equipment wherein wastes are discharged at the internal portion of the equipment. The equipment for waste discharge still comprises a lifting beam that surrounds at least part of an external portion of the body.

The objectives of this invention are also reached through a method to produce an equipment for waste discharge.

The objectives of the invention are also reached through the manufacture of the body in plastic material, such as polyethylene.

The objectives of the invention are also reached through the manufacture of the body by a rotational modeling process.

### Summarized description of the drawings

This invention shall be described in detail below, based on an exemplary embodiment illustrated by the drawings. The figures show:
Figure 1 - is a perspective representation of the equipment for waste discharge as proposed by this invention;
Figure 2 - is a featured representation of the lifting beam that integrates the equipment proposed herein, wherein the figure 2(a) illustrates this element assembled, while the figure 2(b) is an exploded view thereof;
Figure 3 - is a featured representation of the support chassis that integrates the equipment proposed by this invention, wherein the figure 3(a) illustrates this element assembled, while the figure 3(b) is an exploded view thereof;
Figure 4 - is a representation in longitudinal cut of the equipment for waste discharge as proposed by this invention;
Figure 5 - is a featured representation of a portion of the equipment for waste discharge as proposed by this invention;
Figure 6 - is a featured representation of the support flange that integrates the equipment for waste discharge as proposed by this invention;
Figure 7 - is an additional featured representation of the support flange that integrates the equipment for waste discharge as proposed by this invention, with indication of the accommodation region;
Figure 8 - is an additional representation in perspective of the equipment for waste discharge as proposed by this invention;
Figure 9 - is a representation in lower perspective of the equipment for waste discharge as proposed by this invention;
Figure 10 - is a side representation of the equipment for waste discharge as proposed by this invention;
Figure 11 - is an additional representation in perspective of the equipment for waste discharge as proposed by this invention;
Figure 12 - is an additional representation of the equipment for waste discharge as proposed by this invention, wherein the figure 12(a) illustrates a posterior view, while the figure 12(b) illustrates an opposite view;
Figure 13 - illustrates an additional representation in perspective of the equipment for waste discharge as proposed by this invention, with indication of a valid configuration to the lifting beam;
Figure 14 - illustrates a representation in perspective of an additional valid configuration to the lifting beam that integrates the equipment proposed by this invention;
Figure 15 - illustrates an additional representation of the equipment for waste discharge proposed by this invention, with indication of an additional valid configuration to the lifting beam, wherein the figure 15(a) is a representation in perspective, while the figure 15(b) is a side representation; and
Figure 16 - illustrates an additional representation of one of the modalities of the equipment proposed by this invention, and particularly an accessory referred to as reinforcement plate.

### Detailed description of the figures

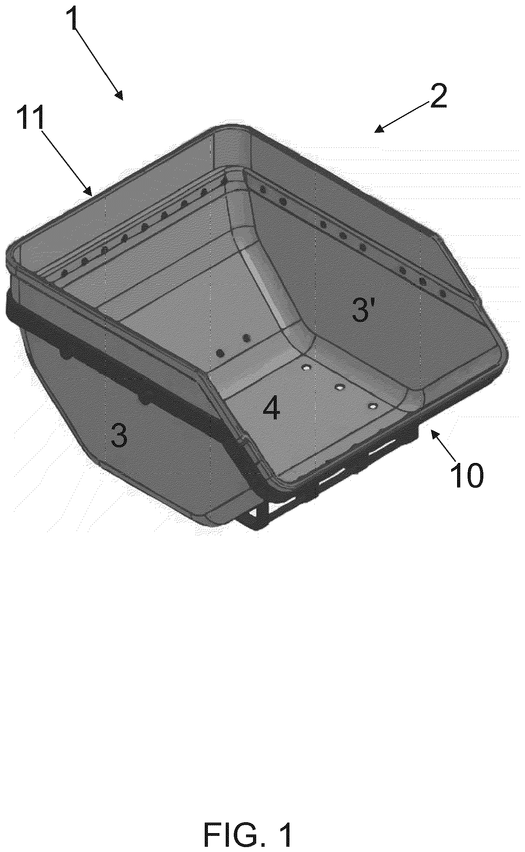

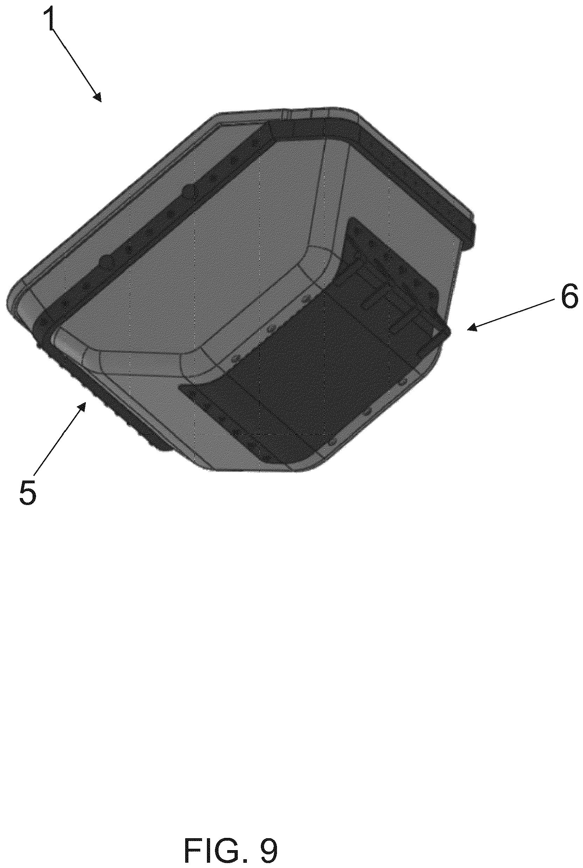

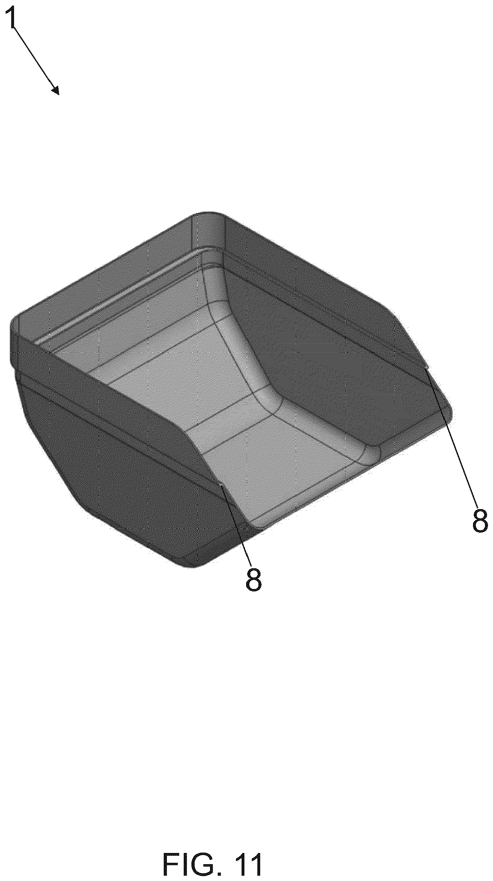

In reference to the figures 1 to 16, this invention describes an equipment for waste discharge 1, as well as a method to produce an equipment for waste discharge.

As previously mentioned, the equipment for waste discharge 1 proposed by this invention shall be only referenced as equipment 1, or by its term popularly known as dump 1.

In an example, the lessons from this invention can be applied to the equipment 1 that is able to store, in its internal portion, wastes from civil construction works. So, it is understood that the equipment 1 proposed by this invention is able to store the rubbish from civil works.

Obviously, the above application cannot be considered as a limiting feature of this invention, so that the equipment proposed herein can have any other application known by the prior art.

In reference to the figures 1 to 16, the equipment for waste discharge 1 proposed by this invention comprises a body 2 basically formed by the connection between a pair of side walls 3, 3' and a bottom portion 4.

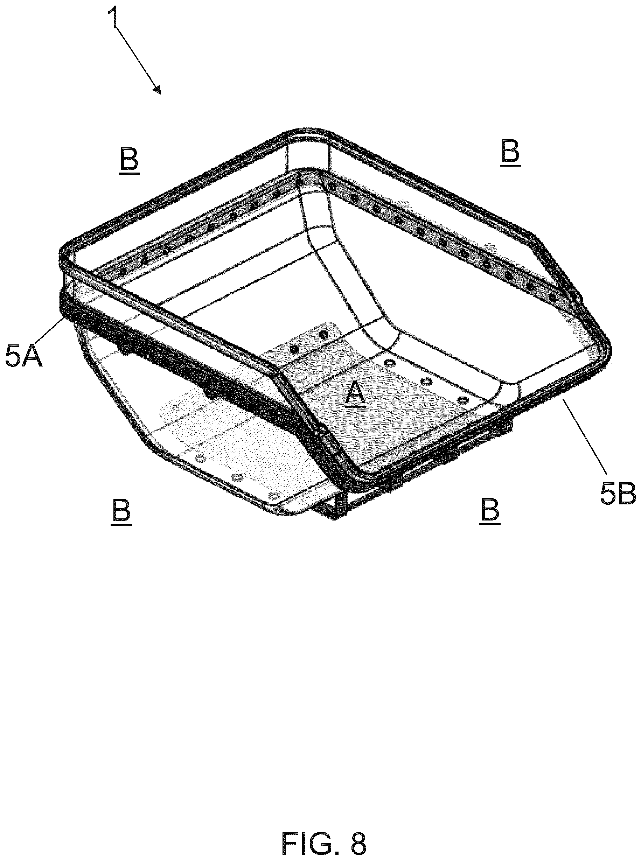

The body 2 must be understood as the portion of the equipment 1 that is able to receive the wastes, particularly, such wastes must be placed at an internal portion A of the equipment, as better observed in the figure 8.

Thus, it should be understood that the body 2 of the equipment 1 shall define an internal portion A, that is able to receive the wastes, as well as an external portion B, that must be understood as the external area of the equipment 1, namely the site of the equipment wherein wastes are not stored. In a public terminology, the external portion B must be understood as the "part outside" the dump 1.

In reference to the figures 1 to 16 and to the bottom portion 4 of the equipment 1, said bottom portion 4 can extend from a first portion (such as the front portion 10) until a second portion (such as the back portion 11) of the equipment, thus limiting, together with the side walls 3 and 3', the body 2 of the equipment 1, as well as its internal area A. Of note, the front 10 and back 11 portions can be also understood as the front 10 and the back 11 walls of the dump 1.

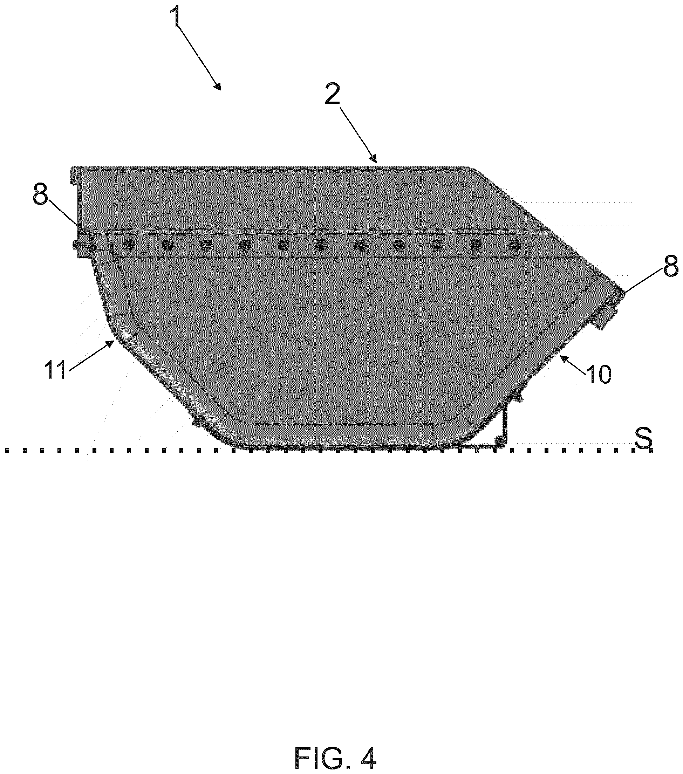

The structural configuration proposed to the bottom portion 4 and to the front 10 and back 11 portions shall be better addressed below, anyways, it is basically understood that the bottom portion 4 is configured as a flat portion, and that the front 10 and back 11 portions are configured as tilted portions, as better noted from the figures 1 and 4.

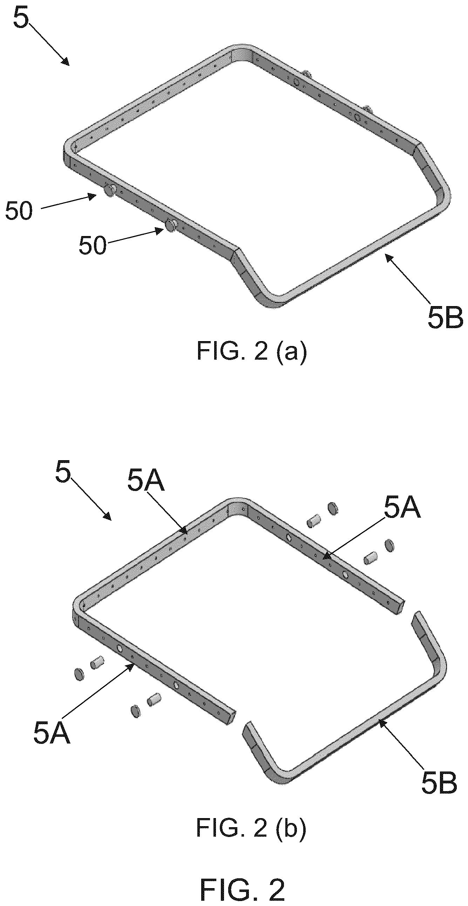

In a specific reference to the figures 1 and 2, the equipment 1 proposed by this invention still comprises a lifting beam 5 that surrounds at least part of the external portion B of the body 2.

As noted from such figures, this configuration of the invention discloses a lifting beam 5 surrounding the whole external portion B of the body 2, meaning that the lifting beam surrounds the external area of the body 2, thus "embracing" the body 2 of the proposed equipment 1.

The contour of the whole extension of the body 2 by the lifting beam 5 should not be considered a limiting feature of this invention, so that, in fully valid alternative configurations, the lifting beam 5 could surround only part of the body 2.

The figure 2 illustrates a featured representation of the lifting beam 5 that integrates the dump 1 as proposed by this invention, wherein the figure 2(a) illustrates such element assembled, while the figure 2(b) is an exploded view of the beam 5. Preferably configured as a metallic part (such as carbon steel 1020), the lifting beam 5 basically comprises a major beam 5A and a reinforcement beam 5B.

The major beam 5A is connected to the reinforcement beam 5B through a welding process, for instance, anyway, any other kind of connection from prior art could be used.

In addition to the content of figures 1, 8 and 9, the major beam 5A surrounds the body 2 in its side portions 3, 3', as well as in its back portion 11. On its turn, the reinforcement beam 5B surrounds the body 2 in its front portion 10, as well as in part of its side portions 3, 3'.

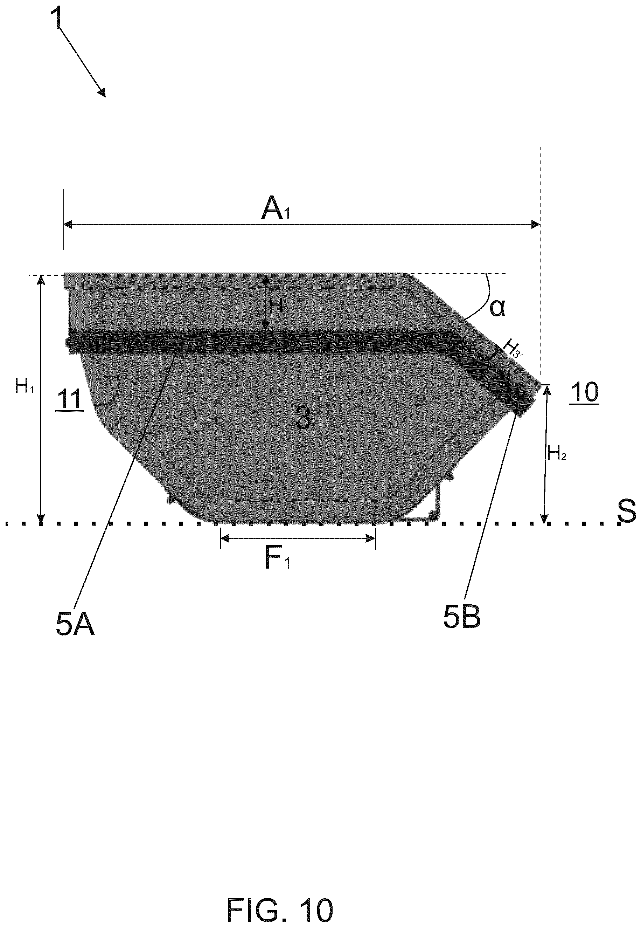

More specifically, as better observed from figures 1 and 10, the reinforcement beam 5B surrounds the external portion B of the body 2 in a region adjacent to its internal portion A. In other words, this invention proposes a reinforcement beam 5B that shall surround the external portion B of the body 2 in a spot close to the limits of the wall of the body 2, meaning that the reinforcement beam 5B shall be placed at the external portion B of the body 2, but in a spot very close to the beginning of the internal portion A thereof.

According to the same figures 1 and 10, the major beam 5A surrounds the external portion B of the body 2, in an upper intermediate region of the side walls 3, 3' and the back portion 11, thus defining a safety height H₃ (figure 10) above (of higher dimension) the same safety height H₃' in the contour of the reinforcement beam 5B. Said safety height H₃ and the consequent placement of the lifting beam allows the transportation of the equipment 1 proposed by this invention through the same trucks currently used to transport the dumps known by prior art.

As still refers to the placement and the contour of the lifting beam 5 around the body 2, the lessons from this invention disclose the placement of the lifting beam 5 in a support flange 8 of the body 2, as better observed from the figures 4, 6, 7 and 11.

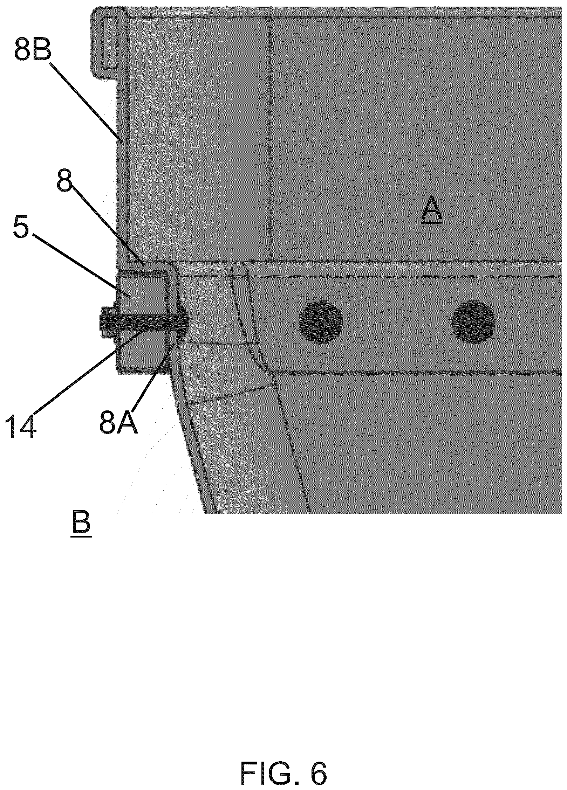

Placed in, at least, part of the contour of the body 2, the support flange 8 is configured as a projection of the wall of the body 2, from its internal portion A towards its external portion B, as better observed from the figure 6.

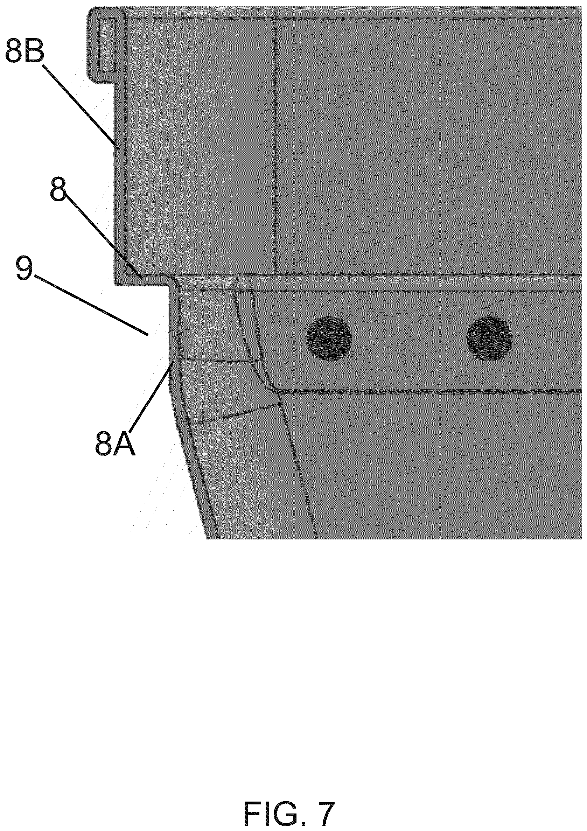

In one embodiment, said support flange 8 is conceived as a tooth orthogonally projecting from the portions 8A and 8B of the wall of the body 2, as observed in the figures 6 and 7. So, the support flange 8 defines an accommodation region 9 for placement of the lifting beam 5.

The placement and formation of the support flange 8 as an orthogonal tooth should not be considered as a limiting feature of this invention, instead, said support flange 8 should be understood as any configuration of the body 2 that allows connection with the lifting beam 5.

In the embodiment depicted by the figure 6, it is proposed that the lifting beam 5 is fixed by transpassing fixation elements (such as screws), so that screw nuts are assembled in the external portion B of the dump, thus avoiding entanglement of wastes in deposit at the internal portion A of the equipment 1, which would raise difficulties during its discharge and cleaning.

As still refers to the support flange 8, and as previously mentioned, this invention proposes its placement in, at least, part of the contour of the body 2, in a non-limitating illustration, it is understood that the support flange could be placed, for instance, only at the side walls 3, 3', and at the back portion 11 of the body 2.

Additionally, a fully acceptable embodiment should consist in placing the support flange 8 completely around the body 2, namely at its side walls 3, 3', at its back portion (wall) 11, and at its front portion (wall) 10.

So, it is understood that the support flange 8 could be placed at least partially around the body 2, or in the full contour of the body 2.

The embodiment that consists in placing the support flange 8 on the lifting beam 5 is advantageous, as it provides improved resistance during vertical movements and tilting of the equipment 1, thus mitigating shearing of the body 2 at the perforation region of fixation elements 14.

So, it is understood that the lifting beam 5 is primarily intended to assist in the performance of vertical movements of the equipment 1 through, for instance, a suitable transportation vehicle. For such, the lifting beam 5 must comprise, at least, one support projection 50, as illustrated in the figure 2(a). This embodiment contemplates the use of four projections 50, anyway, a different number (higher or lower) of projections could be used. The site for placement of the support projections 50 should not be considered a limitating feature of this invention. In valid embodiments, such projections could be placed at the lifting beam 5 and/or at the body 2.

The connection between the lifting beam 5 and the body 2 of the equipment is preferably made through use of conventional fixation methods, such as screws, rings and nuts; for such, the lifting beam must comprise holes placed around its surface. The number of holes shown by the figures should not be deemed as a limitating feature of this invention. Likewise, the connection between the beam 5 and the body 2 through fixation elements should not be understood as a limitating feature either. Briefly, such connection could be performed through any method known by prior art.

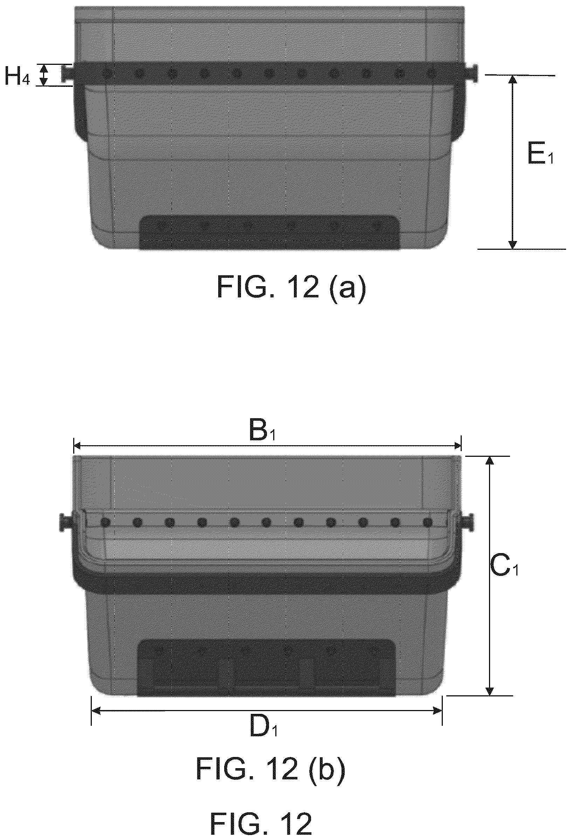

Further, the lifting beam must have a height H₄ (lifting beam height H₄) within a range from 100 to 150 mm. Reference is made to the representation at figure 12.

The illustration shown by figure 2 to the lifting beam 5 should not be understood as a limitating feature of this invention, so that, in fully valid embodiments, said lifting beam could comprise a configuration other than the one depicted by the illustration.

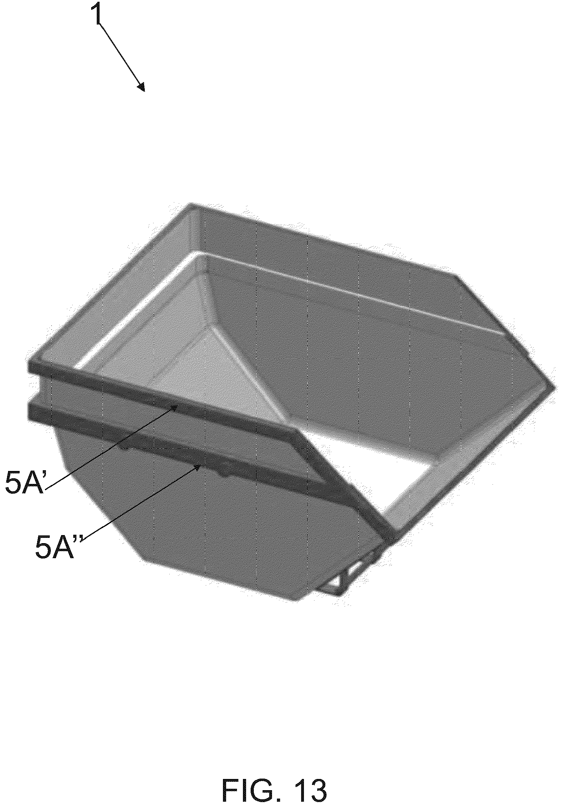

For instance, a valid embodiment should consist in the formation of a lifting beam 5 as illustrated in the figure 13, wherein the major beam is formed by the bars 5A and 5A', so that one of said bars surrounds the external portion B of the body 2, at a region adjacent to its internal portion A, similarly to the description of the reinforcement beam 5B as addressed by the figure 2.

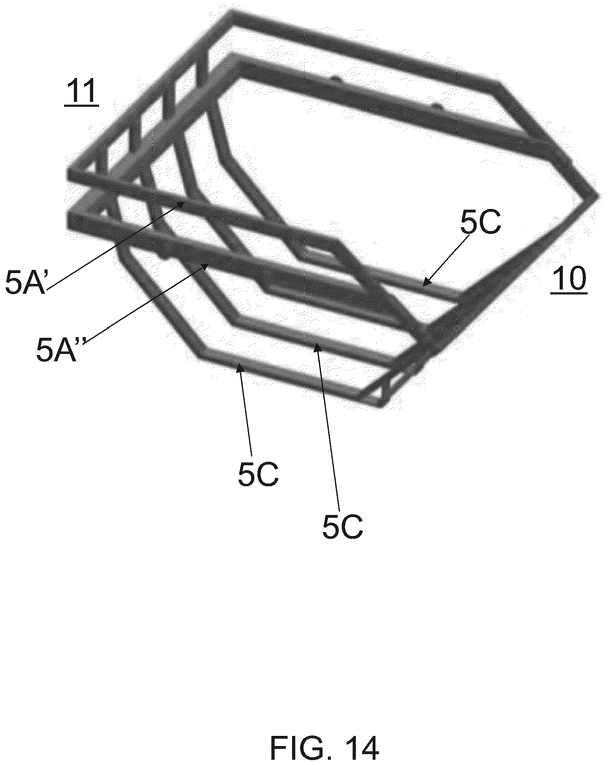

Additionally, another valid embodiment to the lifting beam 5 is represented by figure 14, wherein the lifting beam 5, in addition to the bars 5A and 5A' disclosed by the figure 13, comprises additional bars 5C surrounding the external portion B of the body 2, more specifically from the back portion 11 to the front portion 10 of the equipment 1. Obviously, the number of additional bars 5C illustrated by figure 14 should not be seen as a limitation to this invention. Figure 14 only illustrates the lifting beam 5, and not the body 2 of the equipment 1.

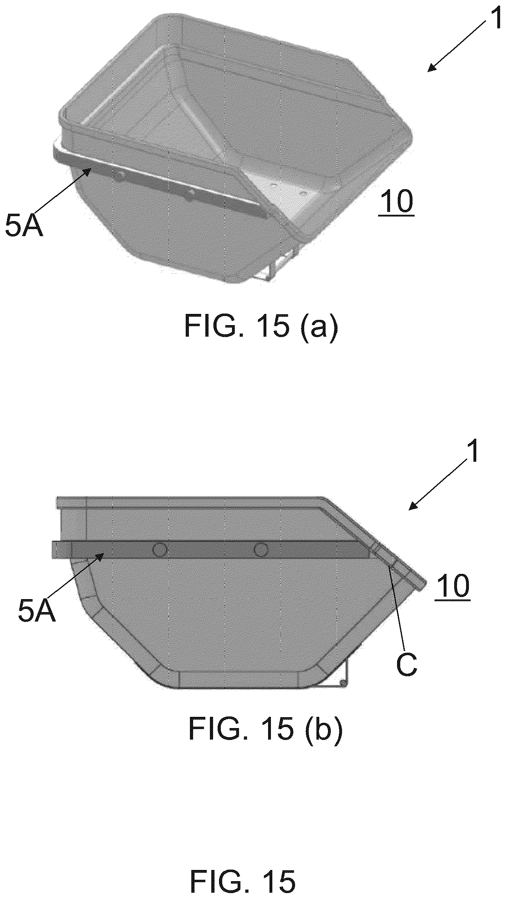

Another valid embodiment for the lifting beam 5 is shown by the figure 15, more precisely by figures 15(a) and 15(b). In these figures, the lifting beam 5 is only formed by the major beam 5A, so that this latter only surrounds part of the external portion B of the body 2. More specifically, the lifting beam does not surround the front portion 10 of the equipment 1, or a part C of its side portions 3, 3'.

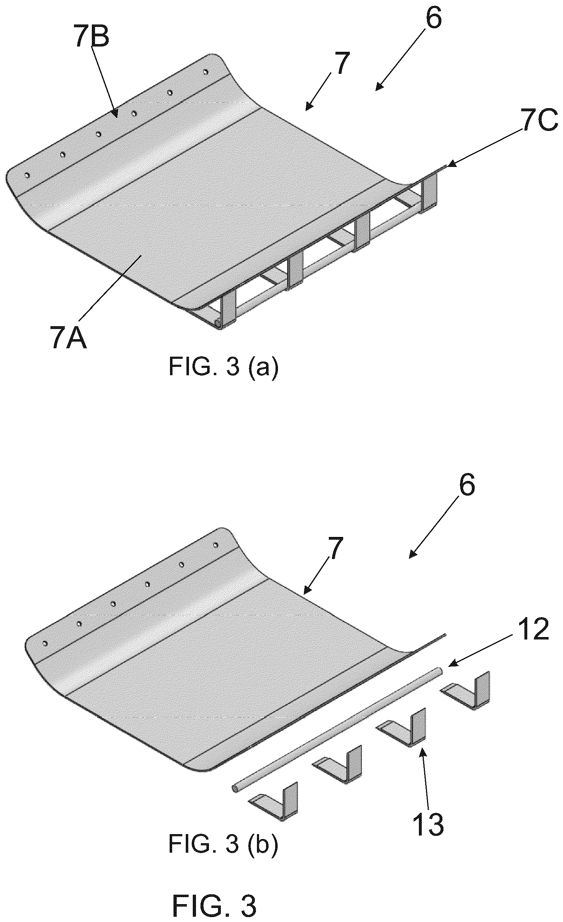

In reference to the figures 1 to 16, the equipment 1 proposed by this invention still comprises a support chassis, basically formed by a support plate 7, a tilting axis 12 and support loops 13. Such elements are illustrated duly assembled in the figure 3(a), and in an exploded view from the figure 3(b).

Preferably manufactured in metallic material (such as steel 1020), the connection between the support plate 7, the tilting axis 12 and support loops 13 takes place, in an exemplary manner, through a welding process. Any other kind of connection known by prior art should be fully acceptable.

More specifically, the support plate 7 must be connected to the body 2 of the equipment so that, as illustrated by the figure 4, the support plate must be placed between the body 2 of the equipment 1 and a support surface S, that can be understood as any surface wherein the equipment 1 is placed, such as, for instance, the soil or the surface of a truck in charge of the transport.

As better shown by the figure 3, this embodiment of the invention teaches that the support plate 7 is formed by a flat portion 7A connected to, at least, a tilted portion 7B, 7C, as a first tilting portion 7B and a second tilting portion 7C.

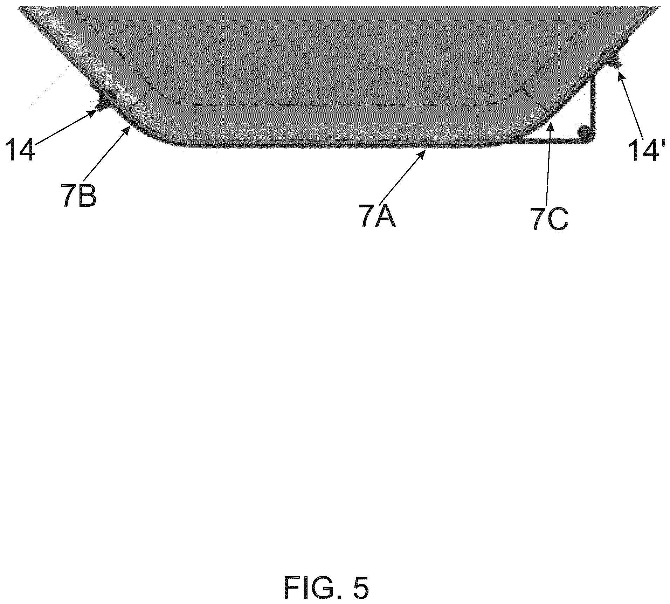

More specifically, the figures 4 and 5 demonstrate that only the flat portion 7A of the support plate 7 keeps contact with the surface S during the correct placement of the dump on the surface S. so that the tilting portions 7B and 7C are lifted in relation to the support surface S, without contact with said surface.

The figures 3 to 5 also provide a clear view on the form proposed to the fixation of the support chassis 6 on the body 2 of the equipment 1. In this embodiment of the invention, the support plate 7 is connected to the body 2 through points of the body 2 and of the support plate 7 that do not keep contact with the support surface S.

More specifically, such fixation takes place through placement of, at least, a fixation element 14 at the tilting portions 7B and 7C of the support plate 7. In this embodiment, and as noted in the figure 5, a fixation element 14 is placed at the tilting portion 7B, while a fixation element 14' is placed at the tilting portion 7C. So, it is understood that said fixation elements 14, 14' are placed at portions of the support plate 7 that do not keep contact with the support surface S.

As to the fixation elements 14, 14', they are preferably configured as screws, rings and nuts. Anyway, any other fixation element from prior art could be used.

This form of fixation as proposed to the support plate 7 is advantageous, as it preserves, the fixation elements 14, 14' from damages caused by the friction during further dragging actions involving the equipment 1. Additionally, the folded form to the chassis 6, through its tilting portions 7B and 7C, and the fixation thereof at portions of the body 2, without contact with the support surface S, provides improved stability to the equipment 1, and mitigates the shearing efforts of the dump 1 at the perforation region of the fixation elements 14 14' during dragging.

According to the figure 3, this embodiment of the invention contemplates a support chassis 6 having a tilting mean 12, also referred to as tilting axis, as well as a plurality of support loops 13. According to the figure 3(b), the invention discloses a connection (preferably through a welding process) of each support loop 13 to the tilting portion 7C of the support plate, as well as the trespass and placement of the tilting axis 12 through the support loops 13.

More specifically, the support loops 13 are configured as having the form of an "L", thus comprising a first segment placed orthogonally to a second one, and still more preferably, the lessons disclosed herein suggest a tilting axis 12 placed and hosted at the intersection point between the first segment and the second segment of the support loops 13.

The function of support loops 13 and of the tilting axis 12 basically consists in providing means to allow tilting, meaning the movement of the equipment 1 to lower one of its ends in relation to the opposite end.. In this embodiment, and due to the placement of the tilting axis 12 and of the support loops 13 at the front portion 10 of the equipment 1, it is understood that the axis 12 and its loops 13 shall allow lowering the front portion 10 in relation to the back portion 11, so that the wastes contained in the equipment 1 can be discharged through a truck commonly used as transport mean for dumps.

Of note, the waste discharge into the internal portion A of the equipment 1 is not an essential feature of this invention; anyway, the truck in charge of the transport usually comprises projections (contact means) that, through the contact with the tilting axis 12, shall allow the equipment performing the movement described above, thus discharging wastes into a certain suitable site.

The form proposed and illustrated for the support loops 13 and for the tilting axis 12 should not be considered as limitating features of this invention, so that any element structurally configured to allow a movement as previously described could be used.

The introduction and removal of wastes from the internal portion A of the dump is facilitated by the configuration proposed for its front 10 and back 11 portions. More specifically, the front portion 10 of the equipment 1 defines a tilt angle that favors the introduction and removal of wastes from the dump 1, as better observed from the figures 4 and 10.

Configured as a descending inclination of the side walls 3, 3' of the dump 1, the tilt angle α defines that the front portion 10 of the equipment 1 shall set a height (such as a second height H₂) in relation to the support surface S. In this embodiment of the invention, the second height H₂ is lower, when compared to the first height H₁ defined between the back portion 11 and the support surface S, as illustrated by figure 10..

Once described a valid structural form of the equipment for waste discharge as proposed by this invention, we shall describe characteristics of materials as proposed to the equipment 1, as well as of the manufacturing process of the body 2 of the dump 1.

As previously described, the lifting beam 5 and the support chassis 6 are made of metallic materials, such as carbon steel 1020. Such elements can be produced through various processes, such as cut by polycot, plasma, laser, calendaring, among others. The connection between the lifting beam 5 and the support chassis 6 at the body 2 preferably takes place through the use of fixation elements 14, as previously discussed.

As to the body 2 of the equipment 1, it is made of a composition comprising at least a plastic material, and preferably through transformation by rotational molding process, also known as rotomolding.

In one embodiment, the plastic material (also referred to as first material) used to manufacture the body 2 consists in polyethylene, that is added to a mould in the form of powder, and alternatively some additives can be added, such as pigments selected to provide final color to the part (body 2), anti-UV stabilizers, among others commonly used in rotomolded parts of polyethylene. In one modality, an amount from 50 to 70 kg of polyethylene in the form of powder is used to conform the body 2. In fully valid embodiments, the body 2 could be manufactured from other materials, such as polyamide, polyester, polycarbonate or polypropylene.

To completely melt the plastic material and for its perfect adhesion to the internal part of the mold, the polyethylene must be previously pigmented and transformed into powder, for instance, through a process known as composting and micronization. This process is basically implemented in two steps: the first consists in melting the polyethylene in pellets in an extrusor together with additives, such as pigments and anti-UV stabilizers intended for use, so as to form a homogeneous compound. Such additives can be added to ensure the expected quality of the final product, as it is the case with anti-UV stabilizers, responsible for delayed degradation of parts undergoing long-term exposure to climate adversities.

Once obtained the homogeneous compound, this latter can be once more granulated into pellets, and then micronized in lower particles (also called "powder") that, being molded through a rotational molding process, allow the complete polyethylene melt for an excellent finishing at the final part.

Upon adding the micronized plastic to the mold, this is closed, and the arm containing the mold starts the rotational movement.

Once performed said rotational movement, the set mold-arm is then inserted into an oven (heating element) pre-heated at a temperature considered high enough to melt the polyethylene inside the mold, and cause it to slide through the mold's internal walls.

So, the melted polyethylene remains in deposit at the internal walls of the mold through continuous layers, thus acquiring the format designed for the body 2 of the equipment 1.

Once the polyethylene is deposited at the mold's internal walls, the set mold-arm is removed from the oven and re-cooled through forced ventilation, so that water droplets can be used for cooling. The cooling takes place until the body 2 reaches suitable stability and temperature to be removed from the mold, thus allowing the use of the mold in the formation of a new part.

Once removed the part from the mold, and without compulsory use of any of the lessons disclosed herein, the body 2 can be placed at a template for some time, thus allowing it to keep its dimensions, with a better coupling of the body 2 to the metallic parts previously described.

According to the previous description, the manufacturing process of a body 2 of an equipment for waste discharge basically comprises four different steps, namely: (i) loading; (ii) heating (or cooking); (iii) cooling and (iv) unloading (or dismodeling).

As to the machinery used in the rotational modeling process, it is described herein, just on an illustrative basis, a possible use of basically three models, such as *shuttle,* carroussel and *clamshell.*

Briefly, the *shuttle* model comprises two modeling stations in line, so that, while one of them is re-cooled and reloaded, the other remains inside the oven, in a heating process.

In the carroussel model, the gyratory arm moves through a circular trajectory, thus traversing the loading/unloading, cooking at the oven and recooling stations.

On its turn, the *clamshell* model contemplates a gyratory arm inserted into a compact oven, wherein the oven structure is similar to a shell. Upon heating, the oven is opened, and the process proceeds through the recooling, unloading and loading steps.

As to the mold, the steel plate molds are as usual as the melted aluminum molds. The first ones are less expensive but have lower thermal exchange and durability. On their turn, the melted aluminum molds become more competitive under economical aspects, as additional molds must be produced from a same matrix. Despite their improved thermal change, they involve higher initial costs. The use of a specific mold does not appear as an essential feature of this invention.

In line with the prior description relating to the equipment 1, this invention still describes a method to produce an equipment for waste discharge. Briefly, the method proposed herein comprises the step of manufacturing the body 2 of the equipment 1 through a rotational modeling process, by using a composition that comprises, at least, a plastic material such as polyethylene.

Still in line with the prior description, the method proposed herein comprises the step of placing the lifting beam 5 at the external portion B of the body, so that said beam 5 surrounds at least part of the external portion B. As previously mentioned and as shown by the figures, it is perfectly possible to place the lifting beam 5 throughout the whole contour of the body 2.

As still refers to the placement of the lifting beam 5, the methodology proposed herein teaches that it is placed at the accommodation region 9 of the support flange 8, as noted, for instance, in the figures 6 and 7.. In line with the prior description, it is understood that the support flange 8 is a projection of the wall of the body 2, from the internal portion A towards the external portion B.

Further, and in line with the prior description, the method proposed by this invention still comprises the step of placing the reinforcement beam 5B at a region adjacent to the internal portion A of the body, as well as connecting at least one of the tilting portions 7B, 7C of the support plate 7 to the body 2 of the equipment 1.

Similarly to the prior description, the methodology proposed herein still comprises the step of placing a support chassis 6 between the body 2 of the equipment 1 and the support surface S, wherein the support chassis 6 comprises a support plate 7 formed by a flat portion 7A connected to, at least, a tilting portion, such as a first tilting portion 7B, and a second tilting portion 7C.

More specifically, as shown by the figures 4 and 5, only the flat portion 7A of the support plate contacts the surface S during the correct placement of the dump on the surface S, so that the tilting portions 7B and 7C are lifted in relation to the support surface S and do no longer keep contact with said surface.

Additionally, the figures 3 to 5 provide a clear view on the form proposed to the fixation of the support chassis 6 on the body 2 of the equipment 1. In this embodiment of the invention, the connection between the support plate 7 and the body 2 takes place at points of the body 2 and of the support plate 7 that do not contact the support surface S. As previously described, such fixation is implemented through, at least, one fixation element 14 at the tilting portions 7B and 7C.

Additionally, and in line with the prior description, the methodology proposed herein still teaches that the support chassis 6 has a tilting mean 12, also referred to as tilting axis 12, as well as a plurality of support loops 13.. The figure 3(b) illustrates a proposed connection (preferably through a welding process) between each of the support loops 13 and the tilting portion 7C of the support plate, as well as the trespass and placement of the tilting axis 12 throughout the support loops 13.

Still in conformity with the prior description, the invention contemplates a support chassis 6 configured as a metallic part.

In fully valid embodiments, the equipment for waste rejection 1 proposed herein may comprise volumes with a range of 3 m³, 4 m³, 5 m³ and 7 m³. Obviously, other volumes than the above-mentioned ones are fully acceptable.

A valid dimension to the equipment 1 is exposed by the table below. Obviously, such values do not represent any limitation to the invention. Reference is made to the figures 10 and 12.

| Dump | Dimensions (mm) | | | | | | |
|---|---|---|---|---|---|---|---|
| Volume (m³) | A₁ | B₁ | C₁ | D₁ | E₁ | F₁ | Tolerance |
| 3 | 2065 | 1757 | 1115 | 1510 | 860 | 720 | ±10% |
| 4 | 2600 | 1760 | 1200 | 1510 | 860 | 1255 | ±10% |
| 5 | 2650 | 1760 | 1390 | 1510 | 960 | 1230 | ±10% |
| 7 | 3260 | 1750 | 1420 | 1500 | 990 | 1700 | ±10% |

As an additional option to the equipment proposed herein, this latter could comprise an articulated or slide cover, thus covering its internal portion A.

So, the invention describes an equipment for waste discharge 1, as well as a method to produce said equipment 1. Just on an illustrative basis, the equipment 1 proposed herein has an approximate weight within a range from 180 kg to 235 kg (wherein the body 2 of the equipment has approximate weight from 55 kg to 80 kg); on their turn, the dumps from prior art have approximate 390 kg weight.

Last, any reference to the range of values herein must obviously comprise the lowest and the highest limits of the relevant range, as well as any value within said limits. For instance, a range from 5 to 10 mm must comprise the lowest and highest limits (5 and 10), as well as any value between them.

Further, the polyethylenes of this invention can be formed through polymerization of the ethylene, and optionally one or more comonomers. Ethylene can be obtained from oil and/or from reneawable sources, such as ethylene obtained by dehydration of alcohols from renewable sources, such as sugar cane.

More specifically, in one or more embodiments, the polyethylene has at least 5% carbon content from renewable source, as determined by the ASTM D6866-18 - Method B Additionally, other embodiments may include, at least, 10%, 20%, 40%, 50%, 60%, 80% or 100% carbon from renewable origin.

For instance, in one or more embodiments, the renewable carbon source is one or more vegetable materials selected from the group consisting of: sugar cane, beetroot, acer plant, date-palm, sorghum, American agave, corn, wheat, barley, rice, potato, cassava, sweet potato, seaweeds, fruits, materials comprising cellulose, wine, materials comprising hemicellulose, materials comprising lignin, wood, straw, cane bagasse, sugar cane leaves, oven-roasted corn, wood residues, paper and combinations thereof.

In one or more embodiments, the ethylene from renewable origin can be obtained through fermentation of a renewable carbon source to produce ethanol, that can be subsequently dehydrated to produce ethylene. In addition to ethanol, the fermentation still produces byproducts of higher alcohols. If the byproducts of higher alcohols are present during dehydration, impurities of high alkanes can be formed close to the ethanol. So, in one or more embodiments, ethanol can be purified prior to dehydration for removal of the byproducts of higher alcohols, while, in other embodiments, ethylene can be purified for removal of impurities of higher alkanes after dehydration.

So, the ethanol from renewable source, known as bioethanol, is obtained through fermentation of sugars derived of cultures such as cane and beet root, or of hydrolyzed starch that, on its turn, is associated to other cultures such as corn.. It is also understood that ethylene from renewable source can be obtained from products originated of cellulose and hemicellulose hydrolysis, that can be found in many agricultural byproducts such as sugar cane straw and bagasse. This fermentation is performed in the presence if various microorganisms, among which the most relevant is the yeast *Saccharomyces cerevisiae.* The ethanol resulting therefrom can be converted into ethylene through a catalytic reaction at temperatures usually above 300 °C. For such, a large variety of catalyzers can be used, such as high specific surface area gamma-alumina. Other examples encompass the lessons from the Patents U.S. Nos. 9.181.143 and 4.396.789, that are incorporated hereto by reference, in their whole.

In one or more embodiments, the polyethylene can show a fluidity index (I₂), measured according to the ASTM D1238 at 190 °C and 2.16 kg, ranging from 2 to 7 g/10 min.

Still in one or more embodiments, the polyethylene can have its density measured according to the ASTM D792, ranging from 0,930 g/cm³ to 0,945 g/cm³.

In several embodiments, the composition can, in addition to polyethylene, optionally include one or more additives, such as (primary and/or secondary) antioxidants, anti-UV stabilizers, pigments, loads, sliding agents, neutralizing agents, antistatic agents, color intensifiers, dyes, lubricants, flow asisstants, nucleants, etc.

As an additional advantage from the lessons disclosed herein, the contours (borders) of the equipment 1 are rounded, thus reducing the risk of accidents during users' contact with the equipment. Such feature still slows an easier dismodelling of the body 2 during production.. In a merely exemplary description, the fold has a radius of, at least, 5 centimeters. Contours of the equipment 1 should be understood as the lines limiting the body 2 of the equipment 1.

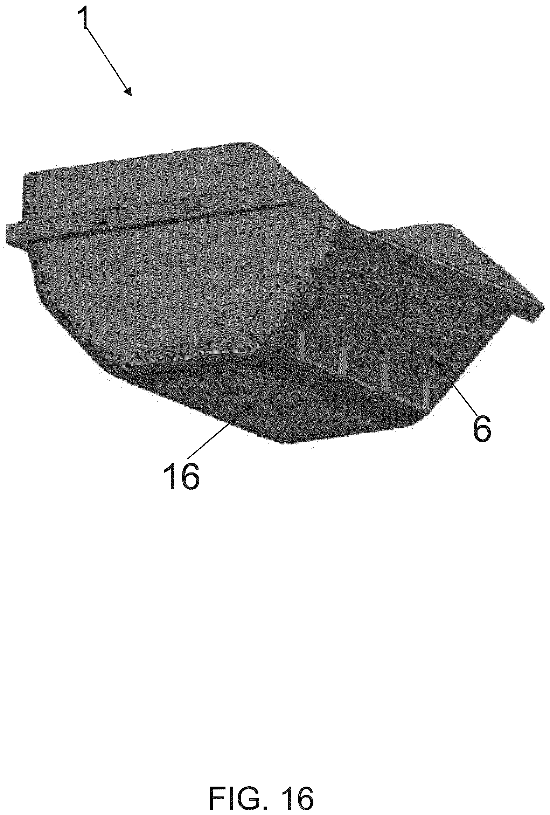

Last, and in reference to the figures 4 and 16, the equipment proposed herein allows using a reinforcement plate 16 placed between the support chassis 6 and the support surface S. In one embodiment, said plate 16 is made of polyethylene, preferably of ultra-high molecular weight polyethylene, being connected to the flat portion 7A of the support chassis 6.In preferential embodiments, said ultra-high molecular weight polyethylene can have an average molecular weight measured according to the Rule ASTM D4020, by using the Margolies equation, that corresponds to less than 3×10⁶ g/mol.. Of note, the reference of the reinforcement plate 16 does not imply a mandatory use thereof in this invention, so that the element can be understood as an accessory, meaning that its use shall depend on the user's intention.

Once described an exemplary preferential embodiment, it should be understood that the scope of this invention encompasses other possible variations, being exclusively limited by the content of the attached claims, including further equivalents.

## Claims

1. Equipment for waste discharge (1), **characterized by** the fact that it comprises a body (2) formed by the connection between a pair of side walls (3, 3') and a bottom portion (4), so that the body (2) defines an internal portion (A) of the equipment (1), wherein the waste discharge is performed at the internal portion (A) of the equipment (1), so that the equipment for waste discharge (1) still comprises a lifting beam (5) surrounding, at least, a part of an external portion (B) of the body (2).

2. Equipment (1) according to the claim 1, **characterized by** the fact that it still comprises a support chassis (6), wherein the support chassis (6) comprises a support plate (7) connected to the body (2) of the equipment (1), to the support plate (7) placed between the body (2) of the equipment (1) and a support surface (S), wherein the support plate (7) is formed by a flat portion (7A) connected to, at least, one tilting portion (7B, 7C).

3. Equipment (1) according to any of the prior claims, **characterized by** the fact that the flat portion (7A) of the support plate (7) contacts the surface (S).

4. Equipment (1) according to any of the prior claims, **characterized by** the fact that the connection between the support plate (7) and the body (2) takes place in, at least, one of the tilting portions (7B, 7C).

5. Equipment (1) according to any of the prior claims, **characterized by** the fact that the body (2) is made of a composition comprising, at least, a plastic material.

6. Equipment (1) according to any of the prior claims, **characterized by** the fact that the lifting beam (5) and the support chassis (6) are metallic parts.

7. Equipment (1) according to any of the prior claims, **characterized by** the fact that at least one portion of the body (2) of the equipment (1) defines a support flange (8) having an accommodation region (9) for placement of the lifting beam (5).

8. Equipment (1) according to any of the prior claims, **characterized by** the fact that the support flange (8) is defined in the whole contour of the body (2) of the equipment (1).

9. Equipment (1) according to any of the prior claims, **characterized by** the fact that the lifting beam (5) is defined, by, at least, a major beam (5A) connected to at least a reinforcement beam (5B), wherein the reinforcement beam (5B) surrounds the external portion (B) of the body, at a region adjacent to the internal portion (A) of the body (2)..

10. Equipment (1) according to any of the prior claims, **characterized by** the fact that the bottom portion (4) of the body (2) extends from a front portion (10) to a back portion (11) of the equipment, wherein the back portion (11) defines a first height (H₁) above a second height (H₂) defined by the front portion (10), wherein the reference to the first (H₁) and the second (H₂) heights is the support surface (S).

11. Equipment (1) according to any of the prior claims, **characterized by** the fact that the support chassis (6) still comprises at least one tilting mean (12), configured to allow tilting of the equipment (1) through a contact between the tilting mean (12) and a contact mean existing in a transportation mean.

12. Equipment (1) according to any of the prior claims, **characterized by** the fact that the body (2) is manufactured through a rotational molding process.

13. Equipment (1) according to any of the prior claims, **characterized by** the fact that it still comprises a reinforcement plate (16) connected to the support chassis (6), wherein the reinforcement plate (16) is made of polyethylene, more preferably in ultra-high molecular weight polyethylene.

14. Equipment (1) according to the claim 13, **characterized by** the fact that the ultra-high molecular weight polyethylene has an average molecular weight measured according to the Rule ASTM D4020, by using the Margolies equation, and corresponding to, at least, 3×10⁶ g/mol.

15. Equipment (1) according to any of the prior claims, **characterized by** the fact that it has rounded borders with, at least, 5 cm-radius.

16. Equipment (1) according to any of the prior claims, **characterized by** the fact that the plasic material is polyethylene.

17. Equipment (1) according to the claim 16, **characterized by** the fact that the polyethylene has a density according to the Rule ASTM D792, ranging from 0.930 g/cm³ to 0,945 g/cm³ and fluidity index according to the Rule ASTM D1238 at 190°C/2,16 kg ranging from 2 to 7 g/10 minutes

18. Method to produce an equipment for waste discharge (1), wherein the equipment (1) comprises a body (2) defined by an internal portion (A), wherein the waste discharge is performed at the internal portion (A) of the equipment (1), wherein the method is **characterized by** the fact that it comprises the steps of:
manufacturing the body (2) of the equipment (1) through a rotational modelling process, by using a composition that comprises, at least, a plastic material.

19. Method according to the claim 18, **characterized by** the fact that the body (2) is formed by the connection between a pair of internal walls (3, 3') and a bottom portion (4), wherein the method further comprises the step of: placing a lifting beam (5) at an external portion (B) of the body, so that the lifting beam (5) surrounds, at least, part of the external portion (B).

20. Method according to any of the claims 18 or 19, **characterized by** the fact that at least a portion of the body (2) of the equipment (1) defines a support flange (8), wherein the method still comprises the step of placing the lifting beam (5) at an accommodation region (9) of the support flange (8).

21. Method according to any of the claims 18 to 20, **characterized by** the fact that the support flange (8) is configured as a projection of the wall of the body (2), from its internal portion (A) towards its external portion (B).

22. Method according to any of the claims 18 to 21, **characterized by** the fact that the lifting beam (5) is defined by, at least, a major beam (5A) connected to at least a reinforcement beam (5B), wherein the method further comprises the step of placing the reinforcement beam (5B) at a region adjacent to the internal portion (A) of the body (2).

23. Method according to any of the claims 18 to 22, **characterized by** the fact that it further comprises the step of:
placing a support chassis (6) between the body (2) of the equipment (1) and a support surface (S), wherein the support chassis (6) comprises a support plate (7) formed by a flat portion (7A) and at least a tilting portion (7B, 7C), wherein the method further comprises the step of:
connecting at least a tilting portion (7B, 7C) of the support plate (7) to the body (2) of the equipment (1).

24. Method according to any of the claims 18 to 23, **characterized by** the fact that the support chassis (6) and the lifting beam (5) are metallic parts.
